# EUROPÄISCHE PATENTSCHRIFT

(11) **EP 1 932 221 B1**
(45) Veröffentlichungstag und Bekanntmachung des Hinweises auf die Patenterteilung: **02.03.2011**
(21) Anmeldenummer: 06819059.4
(22) Anmeldetag: 28.09.2006
(51) Int. Cl.: H01R 13/66, H02K 29/08

(54) **Elektromotor mit einer Anschlussplatte**
Electric motor with a connecting plate
Moteur électrique avec une plaque de connexion

(30) Priorität: 29.09.2005 DE 102005046759
(43) Veröffentlichungstag der Anmeldung: 18.06.2008
(73) Patentinhaber: BSH Bosch und Siemens Hausgeräte GmbH, 81739 München (DE)
(72) Erfinder: KALAVSKY, Michal, 04023 Kosice (SK); VALO, Robert, 07101 Michalovce (SK)
(86) Internationale Anmeldenummer: PCT/EP2006/066823
(87) Internationale Veröffentlichungsnummer: WO 2007/036548

(56) Entgegenhaltungen:
- EP-A2- 1 054 237
- US-A- 4 998 865
- US-B1- 6 354 162

## Beschreibung

Die vorliegende Erfindung betrifft einen Elektromotor mit einer Anschlussplatte.

Insbesondere bei einigen elektrisch kommutierten Motoren mit einem Magnetrotor oder einem Dauermagneten in dem Rotor sind ein oder mehreren Sensoren vorgesehen. Über die Sensoren wird die Lage des Rotors zum Statorfeld erfasst. Diese Größe ist wesentlich um die Statorströme in Abhängigkeit der Rotorlage steuern zu können und dadurch ein maximales Motormoment erreichen zu können.

Diese Sensoren sowie die notwendigen elektrischen Komponenten sind in der Regel auf einer kleinen Leiterplatte (Printed Circuit Board), die im Folgenden auch als PCB bezeichnet wird, vorgesehen. Diese PCB beziehungsweise die Sensoren des PCB werden zwischen die Statorzähne beziehungsweise Statorpole eingebracht, um das Magnetfeld der Rotormagneten erkennen zu können. Alternativ wird die PCB mit den Sensoren auf dem Lagerschild in speziell dafür vorgesehenen Plastikhalterungen vorgesehen, um das Feld eines zusätzlichen Magnetrings, der auf dem Schaft außerhalb des Motors beziehungsweise Motorgehäuses vorgesehen ist, zu erkennen. In beiden Fällen müssen die auf der PCB vorgesehenen Sensoren über relativ lange Verbindungsleitungen mit Steuerungselektronikelementen verbunden werden.

Aus Dokument US 4,998,865 A ist eine Pumpe mit einem Antriebsmotor bekannt, bei der eine Schaltungseinheit Leiterplatten beinhaltet, auf denen eine Vielzahl von Elementen zur Positionsbestimmung der Rotorpole aufgebracht sind. Diese Schaltungseinheit weist Anschlüsse auf, über die sie mit einer Spannungsversorgung und mit Statorwicklungen des Antriebsmotors verbunden ist.

Aus Dokument US 6,354,162 A ist ein Elektromotor mit einer Hallsensoreinheit zur Positionsbestimmung der Rotormagneten bekannt. Die Hallsensoreinheit umfasst ein Gehäuse, das eine Leiterplatte mit einem Hallsensor beinhaltet. Der Stator des Elektromotors weist Lücken zur Befestigung der Hallsensoreinheit auf.

Aus Dokument EP 1 054 237 A2 ist ein Drehwinkelsensor bekannt, der eine Rotoreinheit und eine Statoreinheit mit wenigstens zwei Statorteilelementen aufweist, die unter Belassung einer Abstandsausnehmung zueinander angeordnet sind, wobei in der Abstandsausnehmung wenigstens ein Hallsensor zur Bestimmung des Drehwinkels der Rotoreinheit angeordnet ist.

Die bekannten Lösungen weisen den Nachteil auf, dass hierbei hohe Erfassungstoleranzen der Rotorposition in Kauf genommen werden müssen. Zudem ist eine große Anzahl an Motorteilen erforderlich. So müssen insbesondere die Halterungen für die Sensoren und entsprechende Schrauben zur Befestigung vorgesehen sein.

Der Erfindung liegt die Aufgabe zugrunde diese Nachteile zu beheben und insbesondere ein Motorbauteil mit einem einfachen Aufbau zur Verfügung zu stellen.

Der Erfindung liegt die Erkenntnis zugrunde, dass diese Aufgabe gelöst werden kann, indem die Funktionalität eines in einem Elektromotor üblicher Weise vorgesehenen Bauteils erweitert wird.

Die Aufgabe wird erfindungsgemäß durch einen Elektromotor mit den Merkmalen von Anspruch 1 gelöst.

Als Anschlussplatte, die im Folgenden auch als Terminal bezeichnet wird, wird im Sinne dieser Erfindung die interne Klemmenplatte bezeichnet, über die die Wicklungsdrähte der Statorwicklungen angeschlossen werden können. Diese interne Anschlussplatte kann ein externes Terminal, an dem die externen Leitungen angeschlossen werden, beinhalten oder mit diesem beispielsweise über eine Steckverbindung verbunden sein. Durch die erfindungsgemäße Ausgestaltung der Anschlussplatte, kann diese neben der Funktion der Kontaktierung der Spulenwicklungen auch als Halterung und Fixierung für Sensoren dienen. Durch die Integration des Sensorhalters in die Anschlussplatte kann eine separate Haltevorrichtung für die Sensoren, die in der Regel Schrauben und andere Komponenten erfordern würde, entfallen. Die Aufnahmeöffnung in dem Aufnahmebereich kann insbesondere dazu dienen die Sensoren durch diese hindurchzuführen. Zusätzlich können die Aufnahmeöffnungen mit einem Flansch oder Steg versehen sein, der einen durch die Aufnahmeöffnung hindurch geführten Sensor zumindest von einer Seite schützt. Indem in der Anschlussplatte mindestens eine Aufnahmeöffnung vorgesehen ist und die Sensoren somit zu der Seite weisen können, die dem Aufnahmebereich abgewandt ist, können Leitungen von den Sensoren beziehungsweise von der PCB zu Kontakten und/oder einer Steuerungselektronik an der Seite der Anschlussplatte geführt werden die den Sensoren und damit dem Stator abgewandt ist. Die PCB kann dadurch durch ein an dem Motor vorgesehenes Lagerschild geschützt werden.

Erfindungsgemäß weist die Anschlussplatte eine L-Form auf, wobei in einem Schenkel zumindest der Aufnahmebereich und in dem weiteren Schenkel zumindest die Kontakte zum Anschließen beziehungsweise Kontaktieren der Spulenwicklungen des Elektromotors vorgesehen sind. Auf diese Weise können die Kontakte am Rand des Stators angeordnet werden, wo die Anschlussplatte mit einem äußeren Terminal unmittelbar, das heißt ohne Drähte in Verbindung gebracht werden kann. Weiterhin kann der Aufnahmebereich über die Stirnseite des Stators geführt werden und so die Sensoren auf zuverlässige Weise an der Stelle positioniert werden, an der diese die Position des Rotors überwachen beziehungsweise erkennen sollen.

Gemäß einer Ausführungsform weist der Aufnahmebereich zumindest eine Vertiefung zur Aufnahme einer Leiterplatte auf. Diese Leiterplatte beziehungsweise PCB, die zum Kontaktieren der Sensoren dienen kann und zusätzlich Sensorikelemente tragen kann, kann somit an einer geschützten Position gehalten werden und die Position der PCB durch die Vertiefung vorgegeben werden.

An dem Schenkel, in dem die Kontakte vorgesehen sind, kann zusätzlich zumindest ein Befestigungselement zur Befestigung der Anschlussplatte am Stator, insbesondere am Statorpaket vorgesehen sein. Durch dieses Befestigungselement wird eine unmittelbare Fixierung der Anschlussplatte an dem Stator ermöglicht und aufgrund der Integration des Sensorhalters in der Anschlussplatte somit auch die Position der Sensoren genau festgelegt. Durch diese Art der Anschlussplatte und deren Fixierung an dem Stator können Toleranzen der Rotorpositionserfassung eliminiert werden.

Der Aufnahmebereich der Anschlussplatte deckt vorzugsweise einen Teil des Umfangs der Statorstirnseite ab. Im Gegensatz zu einer Vorrichtung, die die gesamte Stirnseite des Stators abdeckt, weist diese Ausführungsform einen vereinfachten Aufbau auf. Es wird lediglich Material benötigt, um den Aufnahmebereich, in dem die PCB aufgenommen werden kann, zu bilden.

Gemäß einer Ausführungsform wird in dem Aufnahmebereich eine Leiterplatte gehalten, die zumindest einen Kontaktstecker zum Kontaktieren mit beziehungsweise Anschließen an den Kontakten der Anschlussplatte aufweist. Durch diese Ausgestaltung können separate Verbindungsdrähte für die Sensoren, die ebenfalls auf der PCB angeordnet sind, vollständig entfallen. Zudem ist nur eine Art der Verbindung in dem gesamten Bauteil realisiert, da auch die Kontaktierung der Wicklungen des Stators über entsprechende Kontaktstecker erfolgen kann.

Alternativ kann in dem Aufnahmebereich zumindest eine Führung für eine Verbindungsleitung zwischen einer Leiterplatte und dem mindestens einen Kontakt vorgesehen sein. Diese Führung kann durch Trennwände in der Vertiefung des Aufnahmebereiches realisiert sein. In diesen Führungen können Verbindungsleitungen, die an der PCB vorgesehen sind, verlaufen und somit geschützt werden.

Die Erfindung betrifft einen Elektromotor, insbesondere einen kommuntierten Elektromotor, mit einem Stator, einem Rotor und zumindest einem Sensor zur Erfassung der Rotorposition. Der Elektromotor zeichnet sich dadurch aus, dass dieser zumindest eine erfindungsgemäße Anschlussplatte mit zumindest einem Aufnahmebereich mit zumindest einer Aufnahmeöffnung für den zumindest einen Sensor umfasst. Durch die erfindungsgemäße Anschlussplatte kann der Elektromotor einen einfacheren Aufbau als herkömmliche Elektromotoren besitzen. Insbesondere können gesonderte Befestigungsvorrichtungen zur Halterung der Sensoren entfallen.

Gemäß einer Ausführungsform weist der Elektromotor zwischen dem Rotor und einem ein Lagerschild tragenden Lager einen Magnetring auf. Dieser zur Überwachung der Rotorposition dienende Magnetring kann bei der erfindungsgemäßen Ausgestaltung des Motors innerhalb des Motorgehäuses vorgesehen werden, da die Sensoren mit der Anschlussplatte des Stators integriert sind. Durch diesen Einbauort des Magnetrings verringert sich die Gesamtbaulänge des Elektromotors gegenüber herkömmlichen Motoren, bei denen der Magnetring außerhalb des Lagerschildes vorzusehen ist.

Am äußeren Umfang des Statorpaketes ist bei dem erfindungsgemäßen Elektromotor vorzugsweise zumindest eine Befestigungsaussparung zur Befestigung von mindestens einer Anschlussplatte vorgesehen. Diese Befestigungsaussparung stellt insbesondere einen Schlitz dar, in den ein Teil der Anschlussplatte eingeführt werden kann. Hierdurch werden der Halt der Anschlussplatte und damit die Position der Sensoren fixiert.

Die vorliegende Erfindung wird im Folgenden anhand der beiliegenden Zeichnungen erneut im Detail erläutert. Es zeigen:
Figur 1: eine schematische Perspektivansicht einer Ausführungsform der Anschlussplatte;
Figur 2: eine Draufsicht auf eine die Anschlussplatte nach Figur 1;
Figur 3: eine Schnittansicht durch die Anschlussplatte nach Figur 1 entlang der Schnittlinie A-A in Figur 2;
Figur 4: eine Untersicht der Anschlussplatte nach Figur 1;
Figur 5: eine Draufsicht auf eine Ausführungsform der erfindungsgemäßen Anschlussplatte ohne Leiterplatte;
Figur 6: eine schematische Perspektivansicht der ersten Ausführungsform der Leiterplatte mit Anschlüssen und Sensoren;
Figur 7: eine schematische Perspektivansicht einer weiteren Ausführungsform der Leiterplatte mit Anschlüssen und Sensoren;
Figur 8: eine Draufsicht auf den Statoraufbau eines Elektromotors mit Anschlussplatte;
Figur 9: eine Teilschnittansicht des Aufbaus aus Figur 8;
Figur 10: eine schematische Teilschnittansicht eines Stator-Rotor-Aufbaus mit Rotorschaft;
Figur 11: eine schematische Teilschnittansicht des Stator-Rotor-Aufbaus nach Figur 10 mit Gehäuse;
Figur 12: eine schematische Draufsicht auf den Stator-Rotor-Aufbau nach Figur 11;
Figur 13: eine schematische Teilschnittansicht einer weiteren Ausführungsform des Stator-Rotor-Aufbaus mit Gehäuse; und
Figur 14: eine schematische Draufsicht auf den Stator-Rotoraufbau nach Figur 13.

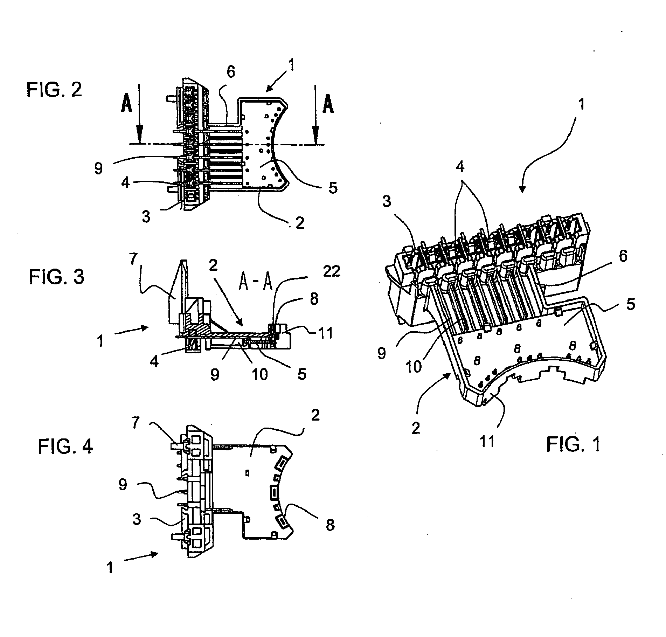

In Figur 1 ist eine Anschlussplatte 1 in perspektivischer Ansicht gezeigt. Die Anschlussplatte 1 besteht aus einem Aufnahmebereich 2 und einem Kontaktbereich 3. In dem Kontaktbereich 3 sind Kontakte 4 vorgesehen, über die der elektrische Anschluss der Spulenwicklungen des Stators eines Elektromotors mit Zuleitungen (nicht gezeigt) hergestellt werden kann. Der Aufnahmebereich 2 weist im Wesentlichen eine Wannenform auf, wobei die Vertiefung der Wanne in dem vorderen Bereich, das heißt in dem zu dem Kontaktbereich 3 beabstandeten Teil des Aufnahmebereiches 2 zur Aufnahme einer Leiterplatte (PCB) 5 dient. Zwischen diesem Teil des Aufnahmebereiches 2 und dem Kontaktbereich 3 ist ein Verbindungsteil 6 vorgesehen, das einen Bestandteil des Aufnahmebereiches 2 darstellt. In diesem Verbindungsteil 6 verlaufen in der Wannenform Trennwände 10, zwischen denen Verbindungsleitungen 9 von der PCB 5 liegen und bis zu den Kontakten 4 in dem Kontaktbereich 3 der Anschlussplatte 1 verlaufen.

Wie sich insbesondere aus der Figur 2, die eine Draufsicht auf die Anschlussplatte 1 darstellt, ergibt, besitzt der vordere Bereich des Aufnahmebereiches 2 eine größere Breite als das Verbindungsteil 6. An dem dem Kontaktbereich 3 abgewandten Ende des Aufnahmebereiches 2 weist dieser eine Rundung auf. Entlang dieser sind die Aufnahmeöffnungen beziehungsweise Durchlassöffnungen 8 für Sensoren 22 vorgesehen. In der dargestellten Ausführungsform sind drei Aufnahmeöffnungen 8 vorgesehen. Die Anordnung der Sensoren 22 und der PCB 5 in dem Aufnahmebereich 2 lässt sich aus der Figur 3 entnehmen. In dieser Figur 3 sind die Aufnahmeöffnungen 8, sowie die an diese angrenzende Schutzwand 11 für die Sensoren 22 zu erkennen. Die Verteilung der Aufnahmeöffnungen 8 entlang des Randes des Aufnahmebereiches 2 ergibt sich insbesondere aus der Figur 4. Durch die Position der Aufnahmeöffnungen 8 sind die Positionen der Sensoren 22 eindeutig vorgegeben, so dass Positionsungenauigkeiten bei der Bestückung der PCB 5 ausgeglichen werden können.

Wie sich weiterhin aus Figur 3 ergibt, sind an dem Kontaktbereich 3, der einen Schenkel der im Wesentlichen L-fömigen Anschlussplatte 1 darstellt, zwei Verbindungskeile 7 vorgesehen. Über diese Verbindungskeile 7 kann die Anschlussplatte 1 an einem Statorpaket 13 befestigt werden, was später genauer erläutert wird.

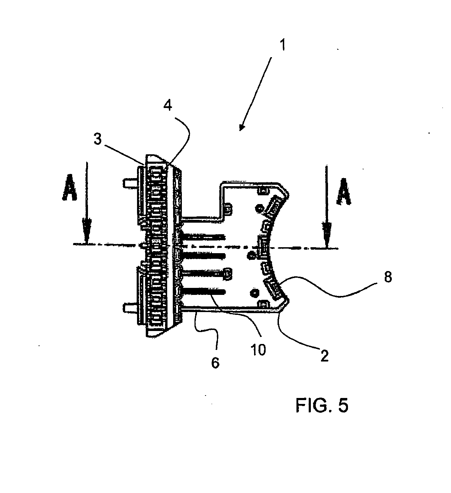

In Figur 5 ist eine Draufsicht auf eine Anschlussplatte 1 ohne PCB 5 gezeigt. In dieser Ansicht lassen sich die Trennwände 10 in dem Verbindungsteil 6, das den vorderen Bereich des Aufnahmebereiches 2 und den Kontaktbereich 3 verbindet, erkennen. Durch diese Trennwände 10 werden Führungen für die Verbindungsleitungen 9 des PCB 5 gebildet.

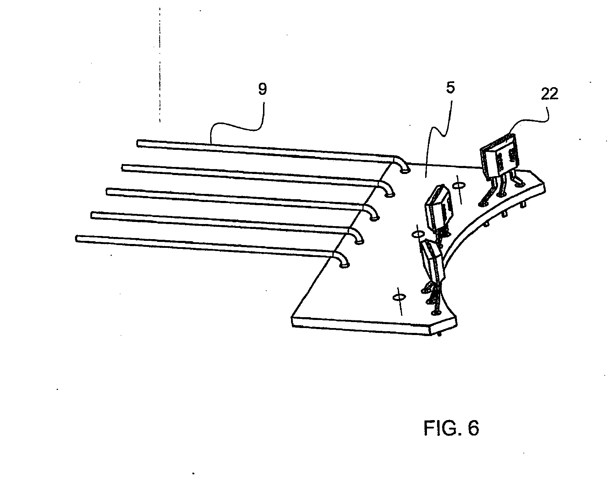

Die Anordnung der Sensoren 22 auf der PCB 5 gemäß einer Ausführungsform ergibt sich auch aus der Figur 6. Wie sich dieser Figur 6 entnehmen lässt, ragen die Sensoren 22 in einer Richtung von der PCB 5 nach oben. In der gleichen Richtung sind die Verbindungsleitungen 9 an der PCB 5 befestigt. Diese PCB 5 kann in den Aufnahmebereich 2 der Anschlussplatte 1 eingebracht werden, wobei die Sensoren 22 durch die Aufnahmeöffnungen 8 in dem Aufnahmebereich 2 hindurch ragen und mittels der Verbindungsleitungen 9 im Kontaktbereich 3 über herkömmliche Verbindungsmittel kontaktiert werden können. Die in Figur 6 gezeigte PCB 5 mit den darauf getragenen Sensoren 22 kann somit vollständig in den Aufnahmebereich 2 der Anschlussplatte 1 aufgenommen werden, wobei die Länge der Verbindungsleitungen 9 lediglich der Länge des Verbindungsteils 6 und des Kontaktbereiches 3 entspricht und diese kurzen Verbindungsleitungen 9 zudem durch den Aufnahmebereich 2 und die darin vorgesehenen Trennwände 10 sicher geführt sind.

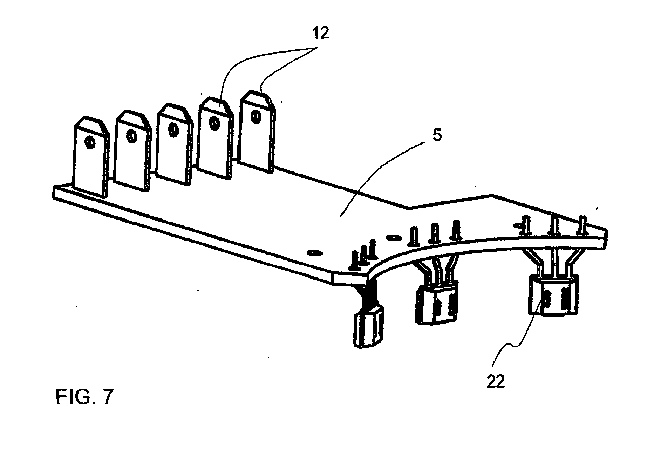

In der Figur 7 ist eine weitere Ausführungsform der PCB 5 gezeigt. Hierbei besitzt diese eine Form, die dem gesamten Aufnahmebereich 2 der Anschlussplatte 1 entspricht. Insbesondere erstreckt sich die PCB 5 bei dieser Ausführungsform auch über das Verbindungsteil 6 und füllt dieses aus. Trennwände 10 sind bei der Verwendung einer solchen PCB 5 nicht vorzusehen. An dem dem Kontaktbereich 3 zugewandten Ende der PCB 5 sind Kontaktstecker 12 vorgesehen, die auf der PCB 5 verlötet sind. Diese Kontaktstecker 12 können mit Kontakten 4 in dem Kontaktbereich 3 verbunden beziehungsweise in diese eingeführt werden.

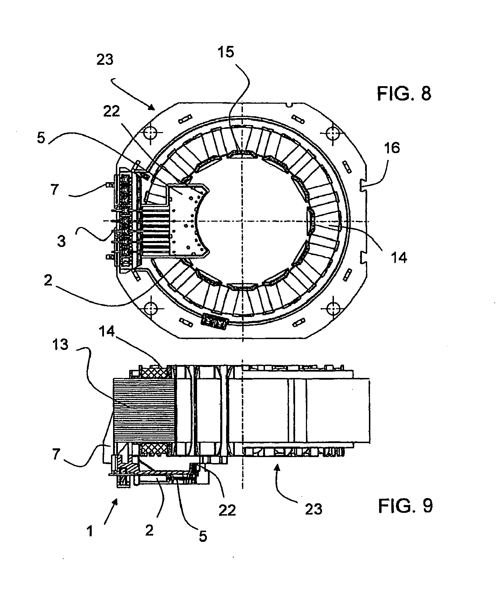

Die Anbringung der Anschlussplatte 1 an der Stator-Anordnung 23 eines Elektromotors ist in Figur 9 gezeigt. Die Anschlussplatte 1 wird mittels der Befestigungskeile 7 in entsprechend dafür vorgesehene Statorschlitze 16 eingebracht. In der befestigten Position liegt somit der Kontaktbereich 3 am Rande des Statorpaketes 13 und ist damit für die Verbindung mit einem so genannten äußeren Terminal ohne die Verwendung von Drähten und der gleichen zugänglich. Weiterhin erstreckt sich der Aufnahmebereich 2 der Anschlussplatte 1 radial und im Wesentlichen parallel zu der Stirnseite des Statorpaketes 13. Die Sensoren 22 sind aufgrund der Länge des Aufnahmebereiches 2 bei der dargestellten Ausführungsform zu der Innenkante des Stators 23, insbesondere der Statorpole 15, beabstandet radial nach Innen versetzt angeordnet.

In der Figur 9 ist ein Teilquerschnitt durch die Stator-Anordnung 23 aus Figur 8 gezeigt. Wie sich hieraus erkennen lässt, ist die Anschlussplatte 1 über die Befestigungskeile 7 an dem Statorpaket 13 befestigt. Der Aufnahmebereich verläuft beabstandet zu der Stirnseite des Stators 23. Hierbei ist die PCB 5 dem Stator abgewandt, beziehungsweise wird durch den Aufnahmebereich 2 von diesem getrennt. Die Sensoren 22 erstrecken sich durch die Aufnahmeöffnungen 8 in Richtung auf den Stator 23.

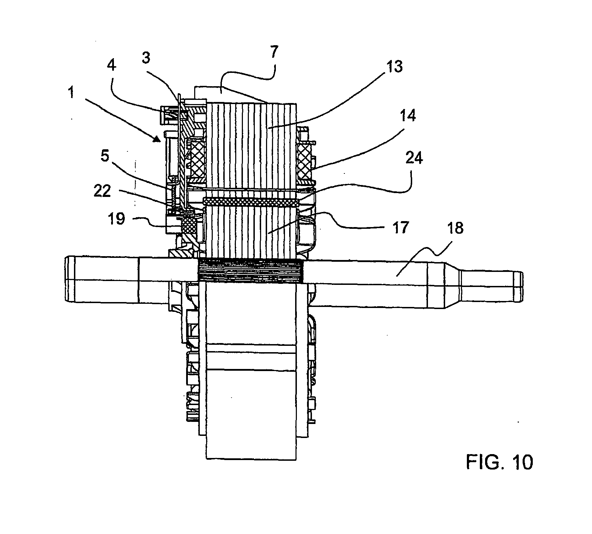

In Figur 10 ist ein Teilquerschnitt durch eine Stator-Anordnung 23 mit darin aufgenommenem Rotor 17 mit Rotorschaft 18 gezeigt. In dem Rotor 17 sind die Rotormagnete beziehungsweise Pole 24 vorgesehen. Vor dem Rotor 17 ist auf dem Rotorschaft 18 ein Magnetring 19 vorgesehen, der einen geringeren Durchmesser als der Rotor 17 aufweist. Der Magnetring 19 besitzt hierbei eine entsprechende Anzahl an Polen wie das Rotorpaket 17. Der Aufnahmebereich 2 der an dem Statorpaket 13 vorgesehenen Anschlussplatte 1 erstreckt sich von dem Kontaktbereich 3 bis zu dem äußeren Umfang des Magnetrings 19. Hierdurch liegen die Sensoren 22 der in dem Aufnahmebereich 2 gehaltenen PCB 5 in unmittelbarer Nähe des Magnetrings 19 und können dadurch die Rotorposition erfassen.

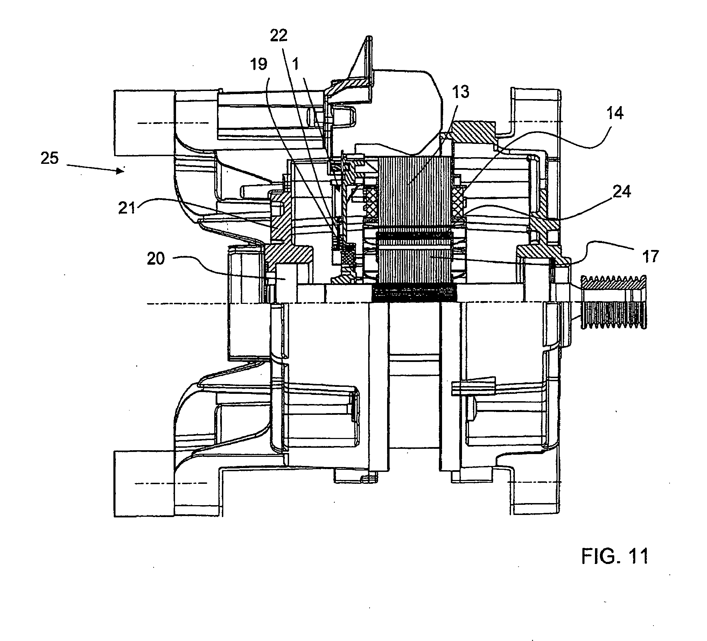

Figur 11 zeigt diese Stator-Rotor-Anordnung in dem Gehäuse, das insbesondere ein Lagerschild 21 umfasst. Dieses Lagerschild 21 ist über das Lager 20 auf dem Rotoschaft 18 gelagert. Der Magnetring 19, der vor dem Rotor 17 angeordnet ist, liegt somit zwischen dem Rotor 17 und dem Lagerschild 21. Da der Magnetring 19 in dem Gehäuse auf einem freien Stück des Rotorschaftes 18 aufgenommen werden kann weist der so gebildete Motor 25 eine geringe Baulänge auf.

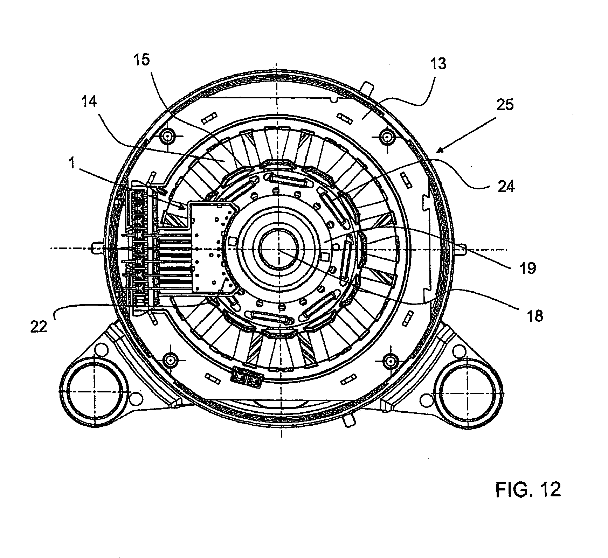

In der in Figur 12 gezeigten Draufsicht auf diese Ausführungsform des Elektromotors 25 sind zum einen die Statorwicklungen 14 zu erkennen. Weiterhin ist die Position des Magnetrings 19 angedeutet und die in dem Rotor 17 vorgesehenen Rotorhauptpole beziehungsweise Rotormagneten 24. Die Sensoren 22, die auf der in dem Aufnahmebereich 2 vorgesehenen PCB 5 gehalten sind, liegen hierbei zwischen den Magneten 24 des Rotors 17 und dem Magnetring 19.

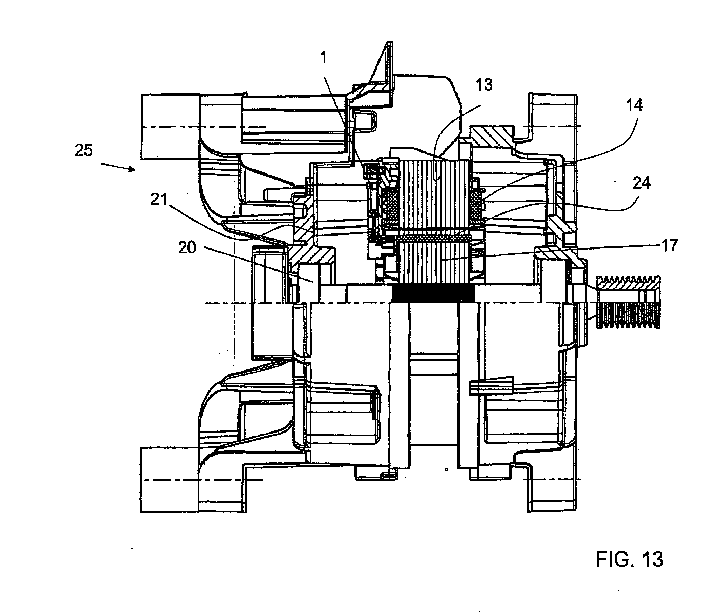

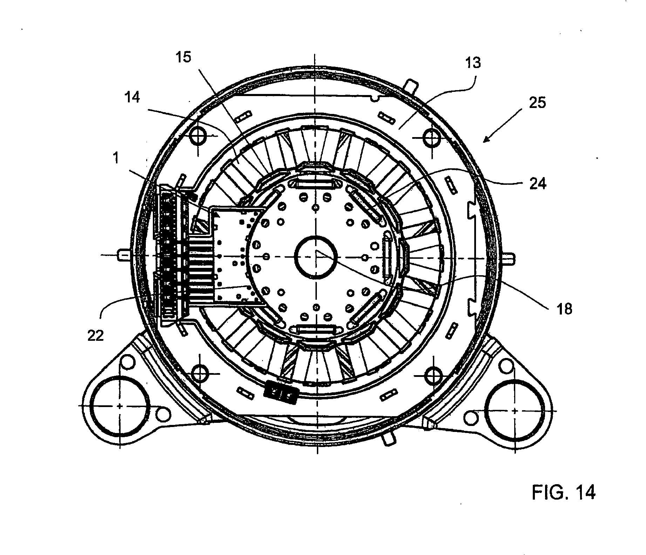

Bei der in Figur 13 gezeigten weiteren Ausführungsform wird die Position des Rotors 17 über die Sensoren 22, durch Überwachung der Rotorhauptpole 24 bestimmt. In diesem Fall sind die Sensoren 22 mit den Polen 24 des Rotors 17 ausgerichtet. Wie sich aus der Draufsicht in Figur 14 ergibt, wird diese Ausrichtung durch die Wahl der Länge des Aufnahmebereiches 2 erzielt. In der dargestellten Ausführungsform erstreckt sich der Aufnahmebereich 2 von dem Kontaktbereich 3 aus nur bis zu den Magnetpolen 24 des Rotors 17, wodurch die Aufnahmeöffnungen 8 in der Anschlussplatte 1, in denen die Sensoren 22 gehalten sind, der Position der Magnete 24 entspricht. Bei dieser Ausführungsform ist ein gesonderter Magnetring nicht vorgesehen.

Mit der vorliegenden Erfindung ist es möglich eine Sensorpositionierung mit minimalen Toleranzen zwischen dem Statorpaket und dem Motorlagerschild sowie zwischen dem Motorlagerschild und Plastiksensorhaltern zu erzielen. Die Erfindung erlaubt eine minimale Toleranz zwischen den Statorzähnen beziehungsweise den Statorpolen und dem Sensor oder den Sensoren. Die Erfindung bietet darüber hinaus extrem kurze Verbindungsleitungen für die Verbindung der Sensoren mit dem Kontaktbereich der internen Anschlussplatte. Zudem können bei der Erfindung in einem Motorbauteil zwei Funktionen integriert werden, nämlich die Funktion der Anschlussplatte und der des Sensorhalters. Es sind keine Schrauben zur Fixierung des Sensorhalters an dem Motor notwendig und zudem kann ein mechanischer Schutz des Sensorhalters und der Sensoren und der PCB durch das Motorlagerschild gewährleistet werden. Mit der Erfindung kann zudem ein kürzerer Schaft für den Motor verwendet werden, da ein Magnetring auf einem freien Teil des Rotorschaftes zwischen dem Lager und dem Rotorpaket vorgesehen werden kann. Schließlich wird die Gesamtzahl der Motoranschlussplatten, der Kontakttypen für Motoranschlussplatten, Schrauben für die Fixierung des Halters und Plastikteile durch die Integration des Sensorhalters in die interne Motoranschlussplatte reduziert.

## Patentansprüche

1. Elektromotor mit einem Statorpaket (13), mit einem Rotor (17), mit zumindest einem Sensor (22) zur Erfassung der Rotorposition und mit einer Anschlussplatte (1) für Statorwicklungen (14) des Statorpakets (13), wobei die Anschlussplatte (1) einen Kontaktbereich (3) mit Kontakten (4) zum Anschluss der Statorwicklungen (14) an externe Leitungen aufweist, wobei die Anschlussplatte (1) zumindest einen Aufnahmebereich (2) für den zumindest einen Sensor (22) zur Überwachung der Rotorposition aufweist, **dadurch gekennzeichnet, dass** der Aufnahmebereich (2) zumindest eine Aufnahmeöffnung (8) für den zumindest einen Sensor (22) zur Überwachung der Rotorposition aufweist, durch die der Sensor (22) hindurchgeführt ist, dass die Anschlussplatte (1) zumindest ein Befestigungselement (7) aufweist, mit dem sie in einer Befestigungsaussparung (16) am äußeren Umfang des Statorpakets (13) des Elektromotors befestigt ist, so dass der Kontaktbereich (3) am Rand des Statorpakets (13) liegt, und dass sich bei der am Statorpaket (13) befestigten Anschlussplatte (1) der Aufnahmebereich (2) von dem Kontaktbereich (3) radial und im Wesentlichen parallel und beabstandet zur Stirnseite des Statorpakets (13) erstreckt, so dass der Sensor (22) zu einer Innenkante des Statorpakets (13) beabstandet radial nach Innen versetzt angeordnet ist.

2. Elektromotor nach Anspruch 1, **dadurch gekennzeichnet, dass** der Aufnahmebereich (2) zumindest eine Vertiefung aufweist, in der eine Leiterplatte (5), die mit dem Sensor (22) bestückt ist, gehaltert ist.

3. Elektromotor nach einem der Ansprüche 1 oder 2, **dadurch gekennzeichnet, dass** die Anschlussplatte (1) eine L-Form aufweist, wobei in einem Schenkel zumindest der Aufnahmebereich (2) und in dem weiteren Schenkel die Kontakte (4) zur Kontaktierung der Statorwicklungen (14) des Elektromotors (25) und das Befestigungselement (7) zur Befestigung am Stator (23) vorgesehen sind.

4. Elektromotor nach einem der Ansprüche 1 bis 3, **dadurch gekennzeichnet, dass** der Aufnahmebereich (2) einen Teil der Statorstirnseite abdeckt.

5. Elektromotor nach einem der Ansprüche 2 bis 4, **dadurch gekennzeichnet, dass** die Leiterplatte (5) zumindest einen Kontaktstecker (12) zum Kontaktieren mit den Kontakten (4) aufweist.

6. Elektromotor nach einem der Ansprüche 2 bis 5, **dadurch gekennzeichnet, dass** in dem Aufnahmebereich (2) zumindest eine Führung (10) für eine Verbindungsleitung (9) zwischen der Leiterplatte (5) und den Kontakten (4) vorgesehen ist.

7. Elektromotor nach einem der vorhergehenden Ansprüche, **dadurch gekennzeichnet, dass** dieser zwischen dem Rotor (17) und einem ein Lagerschild (21) tragenden Lager (20) einen Magnetring (19) aufweist.

## Claims

1. Electric motor with a stator packet (13), with a rotor (17), with at least one sensor (22) for detecting the rotor position and with a connecting plate (1) for stator windings (14) of the stator packet (13), wherein the connecting plate (1) has a contact region (3) with contacts (4) for connection of the stator windings (14) with external conductors, wherein the connecting plate (1) has at least one mounting region (2) for the at least one sensor (22) for monitoring the rotor position, **characterised in that** the mounting region (2) has at least one receiving opening (8) for the at least one sensor (22) for monitoring the rotor position, through which the sensor (22) is led, that the connecting plate (1) has at least one fastening element (7), by which it is fastened in a fastening cut-out (16) at the outer circumference of the stator packet (13) of the electric motor so that the contact region (3) lies at the edge of the stator packet (13), and that the connecting plate (1), which is fastened to the stator packet (13), of the mounting region (2) extends from the contact region (3) radially and substantially parallel to and at a spacing from the end face of the stator packet (13) so that the sensor (22) is arranged radially spaced from and offset inwardly relative to an inner edge of the stator packet (13).

2. Electric motor according to claim 1, **characterised in that** the mounting region (2) has at least one recess in which a circuitboard (5), which is equipped with the sensor (22), is mounted.

3. Electric motor according to one of claims 1 and 2, **characterised in that** the connecting plate (1) has an L-shape, wherein at least the mounting region (2) is provided in one limb and the contacts (4) for contacting of the stator windings (14) of the electric motor (25) and the fastening element (7) for fastening to the stator (23) are provided in the other limb.

4. Electric motor according to any one of claims 1 to 3, **characterised in that** the mounting region (2) covers a part of the stator end face.

5. Electric motor according to any one of claims 2 to 4, **characterised in that** the circuitboard (5) has at least one contact plug (12) for contact-making with the contacts (4).

6. Electric motor according to any one of claims 2 to 5, **characterised in that** at least one guide (10) for a connecting conductor (9) between the circuitboard (5) and contacts (4) is provided in the mounting region (2).

7. Electric motor according to any one of the preceding claims, **characterised in that** this has a magnet ring (19) between the rotor (17) and a bearing (20) carrying an end panel (21).

## Revendications

1. Moteur électrique comprenant un paquet de stator (13), comprenant un rotor (17), comprenant au moins un capteur (22) destiné à détecter la position du rotor et comprenant une plaque de connexion (1) pour des enroulements statoriques (14) du paquet de stator (13), la plaque de connexion (1) présentant une zone de contact (3) munie de contacts (4) pour la connexion des enroulements statoriques (14) à des lignes externes, la plaque de connexion (1) présentant au moins une zone de logement (2) pour l'au moins un capteur (22) destiné à surveiller la position du rotor, **caractérisé en ce que** la zone de logement (2) présente au moins une ouverture de logement (8) pour l'au moins un capteur (22) destiné à surveiller la position du rotor, à travers laquelle le capteur (22) est mené, **en ce que** la plaque de connexion (1) présente au moins un élément de fixation (7), au moyen duquel elle est fixée dans un évidement de fixation (16) sur le pourtour extérieur du paquet de stator (13) du moteur électrique, de sorte que la zone de contact (3) est située sur le bord du paquet de stator (13), et **en ce que**, lorsque la plaque de connexion (1) est fixée sur le paquet de stator (13), la zone de logement (2) s'étend de la zone de contact (3) radialement et essentiellement parallèlement et avec écart par rapport au côté frontal du paquet de stator (13), de sorte que le capteur (22) est disposé radialement en étant décalé vers l'intérieur, avec écart par rapport à un bord intérieur du paquet de stator (13).

2. Moteur électrique selon la revendication 1, **caractérisé en ce que** la zone de logement (2) présente au moins un approfondissement dans lequel est maintenue une plaquette à circuit imprimé qui est équipée du capteur (22).

3. Moteur électrique selon l'une quelconque des revendications 1 ou 2, **caractérisé en ce que** la plaque de connexion (1) présente une forme en L, au moins la zone de logement (2) étant ménagée dans un côté et les contacts (4) pour la connexion des enroulements statoriques (14) du moteur électrique (25) et l'élément de fixation (7) pour la fixation sur le stator (23) étant ménagés dans l'autre côté.

4. Moteur électrique selon l'une quelconque des revendications 1 à 3, **caractérisé en ce que** la zone de logement (2) recouvre une partie du côté frontal de stator.

5. Moteur électrique selon l'une quelconque des revendications 1 à 4, **caractérisé en ce que** la plaquette à circuit imprimé (5) présente au moins une fiche de contact (12) pour la connexion aux contacts (4).

6. Moteur électrique selon l'une quelconque des revendications 1 à 5 **caractérisé en ce qu'**au moins un guidage (10) est ménagé dans la zone de logement (2) pour une ligne de connexion (9) entre la plaquette à circuit imprimé (5) et les contacts (4).

7. Moteur électrique selon l'une quelconque des revendications précédentes, **caractérisé en ce que** celui-ci présente un anneau magnétique (19) entre le rotor (17) et un palier (20) portant un flasque (21).
